**Europäisches Patentamt**

**European Patent Office**

**Office européen des brevets**

(19)

(11) Veröffentlichungsnummer : **0 324 136 B1**

(12) # EUROPÄISCHE PATENTSCHRIFT

(45) Veröffentlichungstag der Patentschrift :
**19.07.95 Patentblatt 95/29**

(21) Anmeldenummer : **88121288.0**

(22) Anmeldetag : **20.12.88**

(51) Int. Cl.⁶ : **G01D 5/20**

(54) **Elektromagnetische Einrichtung für Lagemessungen.**

(30) Priorität : **22.12.87 DE 3743500**

(43) Veröffentlichungstag der Anmeldung :
**19.07.89 Patentblatt 89/29**

(45) Bekanntmachung des Hinweises auf die
Patenterteilung :
**19.07.95 Patentblatt 95/29**

(84) Benannte Vertragsstaaten :
**AT BE CH DE FR GB IT LI LU NL SE**

(56) Entgegenhaltungen :
**DE-A- 2 732 950**
**DE-C- 755 578**

(56) Entgegenhaltungen :
**SU-A- 616 601**
**PATENT ABSTRACTS OF JAPAN, Band 8, Nr.**
**86 (P-269), 19. April 1984; & JP-A-59000672**
**IDEM**

(73) Patentinhaber : **Morgenstern, Jürgen, Prof. Dr.**
**Im Heidewinkel 33**
**D-40625 Düsseldorf (DE)**

(72) Erfinder : **Morgenstern, Jürgen, Prof. Dr.**
**Im Heidewinkel 33**
**D-40625 Düsseldorf (DE)**

(74) Vertreter : **Bauer, Wulf, Dr.**
**Bayenthalgürtel 15**
**D-50968 Köln (Marienburg) (DE)**

**Beschreibung**

Die Erfindung bezieht sich auf eine elektromagnetische Einrichtung für die Messung des Abstandes zwischen den Mittelpunkten bzw. der Winkellage einer induktiven Sonde eines Empfängers und einer induktiven Sonde eines Senders nach dem Oberbegriff des Patentanspruchs 1.

Eine derartige elektromagnetische Einrichtung ist nach der DE-OS 27 32 950 bekannt. Danach sind sowohl für den Sender als auch für den Empfänger jeweils drei zueinander senkrecht stehende Spulen vorgesehen, die mit in der Phase um 90° gegeneinander verschobene Ströme gleicher Frequenz und mit einer Stufe abweichender Frequenz betrieben werden. Auf dieser Weise werden beim Empfänger Spannungen induziert, die eine Verstärkung, Gleichrichtung, Summierung und Weiterverarbeitung erfahren. Die Achsen der Spulen können sich in einem Punkt treffen, jedoch auch versetzt gegeneinander angeordnet sein, schließlich kann ein in einer Ebene angeordnetes Spulenkreuz von einer einhüllenden Spule mit zu dieser senkrechten Achse umgeben sein. Mit einer aus Empfänger und Sender bestehenden Anordnung soll auf diese Weise die Entfernung der Sonden voneinander verdrehungsunabhängig und berührungsfrei fortlaufend erfaßt werden.

Aus der SU-A-616 601 und Derwent-Zusammenfassung ist eine Anordnung zur Messung von magnetischen Feldern bekannt, bei der es auf die Verringerung des Ausmaßes der Sonde und die Erhöhung der Genauigkeit der Messungen ankommt. Zu diesem Zweck ist ein würfelartiges Gehäuse vorgesehen, von dessen Seitenflächen sich zur Erzeugung des elektromagnetischen Feldes Spulen ins Innere des Gehäuses erstrecken, deren Achsen sich in der Mitte des Würfels schneiden, und die, der Geometrie des Würfels folgend, zueinander senkrecht stehen. Die Spulen sind selbst kernlos und haben zur Mitte hingehend kleiner werdende Durchmesser. Im Mittenbereich des Würfels ist ein Ferritkubus angeordnet, der, den Achsen der Spulen entsprechend, eine dreikomponentige Ferritsonde repräsentiert. Die einzelnen Spulen sind derart mit Windungen ausgeführt, daß sie mit zunehmendem Abstand von der Mitte des Würfels zunehmende Windungsquerschnitte aufweisen. Dabei nimmt zugleich die Anzahl ihrer Windungen mit zunehmendem Abstand von der Mitte zu.

Vom einleitend behandelten Stand der Technik ausgehend liegt der Erfindung die Aufgabe zugrunde, diese Einrichtung dahingehend weiterzuentwickeln, daß sie einerseits in einem größeren Entfernungsbereich eindeutige Verbesserungen zuläßt, und daß sie andererseits Abweichungen auf Grund sich ändernder Winkellagen zwischen Sender und Empfänger auf das Entfernungsergebnis ausschaltet oder aber, sofern die Entfernung nicht erfasst werden soll, eindeutige Aussagen im Hinblick auf die Ausrichtung von Empfänger und Sender ermöglicht.

Die Erfindung löst diese Aufgabenstellung durch die in den Patentansprüchen gemachten Vorschläge.

Die Erfindung findet regelmäßig bei der Sonde des Senders Anwendung, während die Sonde des Empfängers entweder in gleicher Weise wie die des Senders gestaltet sein kann oder aber nur aus einer einzigen Spule zu bestehen braucht.

Ein bevorzugtes Anwendungsgebiet der Erfindung ist die Überwachung des Geburtsvorganges, da sich die Sonden sehr klein und leicht ausführen lassen. Bei der vaginalen Untersuchung unter der Geburt läßt sich ein äußerer, ortsfester Sender verwenden, während der Empfänger unter dem Handschuh auf der Kuppe des untersuchenden Fingers liegt, so daß die Maße beim Austasten der Öffnung des Muttermundes bzw. des mütterlichen Beckens aufgenommen werden können. Auch läßt sich die Sonde am Kopfe des Fötus befestigen, dessen Lage somit von außen überwacht werden kann.

Dank der mit zunehmendem Abstand von der Mitte größer werdenden Spulendurchmesser wird, wie an sich bekannt, eine erhebliche Wicklungszahl erreicht. Als Windungsdurchmesser gilt dabei der jeweils mittlere Durchmesser einer einzelnen Windung, welche ihrerseits nicht notwendigerweise kreisrund sein müssen, sondern erfindungsgemäß auch abweichende Windungsformen besitzen können. So können sie insbesondere rechteckige Windungsformen aufweisen. In diesem Falle ist der Gesamtumfang einer einzelnen Windung für die Ermittlung eines äquivalenten Durchmessers zugrunde zu legen.

In besonders vorteilhafter Weise werden sämtliche Spulen der Sonde so gewickelt, daß sich die Windungen jeweils aufeinanderfolgender Spulen einander umschließen. Lediglich die innere Spule scheidet von einer derartigen Umschließung aus.

Mit der erfindungsgemäß gestalteten Einrichtung erfaßte Messungen lassen sich bezüglich der Störungsfreiheit überprüfen, wenn die Sonde des Senders in Bezug auf die Sonde des Empfängers um 360° gedreht wird. Dabei bleibt bei unveränderter Entfernung das in bekannter Weise ausgewertete Empfangssignal praktisch konstant, wohingegen es bei der bekannt gewesenen Sonde den beschriebenen Störungen unterliegt.

Für die meisten Anwendungsfälle ist eine Sonde zweckmäßig, die Spulen aufweist, welche um drei zueinander senkrechte Achsen mit der Maßgabe gewickelt sind, daß eine Schale um den in der Mitte der Sonde gelegenen Kern entsteht, die das Außenvolumen der Sonde definiert. Als zu umwickelnder Körper eignet sich für diesen Fall vor allem ein Würfel. Die sich überdeckenden Windungen der einzelnen Spulen führen selbsttätig zur kompaktesten Anordnung. Im Interesse eines in allen Richtungen gleichmäßigen magnetischen Feldes werden die Spulen so gewickelt, daß sich für jede von ihnen gleiche Windungsquerschnittsflächen ergeben. Dies bedeutet beispielsweise im Hinblick auf den zu umwickelnden Würfel, daß die innere Wicklung mehr Windungslagen als die mittlere und diese wiederum mehr Windungslagen als die äußere aufweist.

Das Spulensystem ist jedoch nicht auf lediglich drei zueinander rechtwinklige Achsen beschränkt, sondern es können auch mehr als drei Achsen und demgemäß mehr als drei Spulen gewählt werden, so daß das Magnetfeld noch gleichmäßiger wird.

Für die Betriebsweise ist die nach dem Stand der Technik bekannt gewesene elektrische Einrichtung einsetzbar. Dies bedeutet, daß das Magnetfeld jeder Spule zeitlich aufeinander folgend periodisch für die Messung aufgebaut und von der Sonde des Empfängers detektiert werden kann.

Wenn die Sonde mit hohlem Kern ausgeführt wird, lassen sich an der Innenwandung und bei Ausführung mit Kern an dessen Außenwandung Mikro-Chips anbringen, die dort mit einem geeigneten Kleber fixiert werden. Sie ermöglichen es, daß die Versorgungsleitung der Sonde auch bei einer großen Anzahl von Spulen lediglich dreiadrig zu sein braucht, indem in bekannter Weise nach dem Multiplex-Verfahren eine zeitlich differenzierte Beaufschlagung der einzelnen Spulen vorgenommen werden kann. Die Ansteuerung mittels durch Phase und/oder Frequenz unterschiedlicher Ströme findet in bekannter Weise Anwendung. Die Anwendung mehrerer Mikro-Chips in unterschiedlicher Lage gestattet es, den jeweils in elektrischem Sinne günstigster Lage zu den Feldlinien angeordneten Mikro-Chip anzusteuern, so daß eine Beeinflussung durch die Feldlinien vermieden wird.

Für den Empfang des elektromagnetischen Feldes ist eine Sonde mit lediglich einer Spule bereits ausreichend, da die Richtungsunabhängigkeit gewährleistet ist. Um wieder zu einer maximalen Signalgröße zu kommen, ist die Ausbildung der Sonde für den Empfänger in gleicher Weise wie für den Sender angebracht, da sich auf dieser Weise die Signale der einzelnen Spulen vektoriell addieren lassen.

Die Ausbildung der Sonde läßt sich vor allem dann mit sehr geringem Volumen ausführen, wenn die einander überdeckenden Windungslagen wechselweise aufgebracht werden, so daß die einzelnen Spulen mit ihren einander umschließenden Windungen einander durchdringen.

Während des Meßvorganges werden die drei Spulen der Sendeeinheit so angeregt, daß die von jeder Sendespule im Empfangssystem induzierten Spannungen getrennt registriert werden können. Das kann z. B. durch zeitlich versetzte Anregung oder durch Anregung mit unterschiedlichen Frequenzen der Sendespulen erreicht werden. Aus den gemessenen induzierten Spannungen wird dann die relative räumliche Lage (inklusive Drehung) vom Sende- zum Empfangssystem berechnet.

Für die Erzeugung eines extrem richtungsunabhängigen Meßsignals läßt sich schließlich noch eine Vielzahl von Spulen vorsehen, die auf einer Kugel über dem jeweiligen Größtkreis aufgewickelt sind, und die sich dann an unterschiedlichen Stellen überdecken. Jede dieser Spulen besitzt dann eine eigene Polachse, die durch den Mittelpunkt der Kugel führt.

Eine beträchtliche Ausdehnung des Anwendungsbereiches ermöglicht die Erfindung dann, wenn als Wechselspannungsgenerator ein Rechteckgenerator mit erhöhter Pulsamplitude verwendet wird. Auf diese Weise läßt sich die Sonde kurzfristig mit extrem hohen Strömen beaufschlagen, die infolge ihrer kurzen Dauer eine Schädigung nicht verursachen können. Derartige Pulse mit langer nachfolgender Pause verbessern zugleich das Signal/Rausch-Verhältnis und sind darüberhinaus physiologisch unbedenklich, weil Verbrennungen infolge zustarker Erwärmung vermieden werden.

Zur weiteren Veranschaulichung der Erfindung wird auf die Zeichnungen Bezug genommen. Darin zeigen:

Figur 1 den Verlauf der Signalspannung in Abhängigkeit vom Meßabstand bei einer Einrichtung mit in bekannter Weise ausgeführter Sonde,

Figur 2 eine entsprechende Darstellung gemäß Figur 1 bei Verwendung einer Einrichtung mit der erfindungsgemäßen Sonde,

Figur 3 die Gegenüberstellung des Meßsignals bei Drehung des Empfängers relativ zum Sender bei einer Einrichtung mit der bekannten Sonde und bei einer erfindungsgemäßen Einrichtung,

Figur 4 eine perspektivische Darstellung eines Achsenkreuzes der Windungsachsen der einzelnen Spulen,

Figur 5 die Ausführungsform der Erfindung bei einem umwickelten Quader,

Figur 6 eine vergrößerte Eckdarstellung eines entsprechend Figur 5 gewickelten Quaders,

Figur 7 die Anordnung von drei Spulen auf einer Kugel,

Figur 8 die Anordnung mehrerer Spulen auf einer Kugel und

Figur 9 einen vergrößerten Ausschnitt einer Spule mit der gemeinsamen Ableitung für sämtliche Spulen.

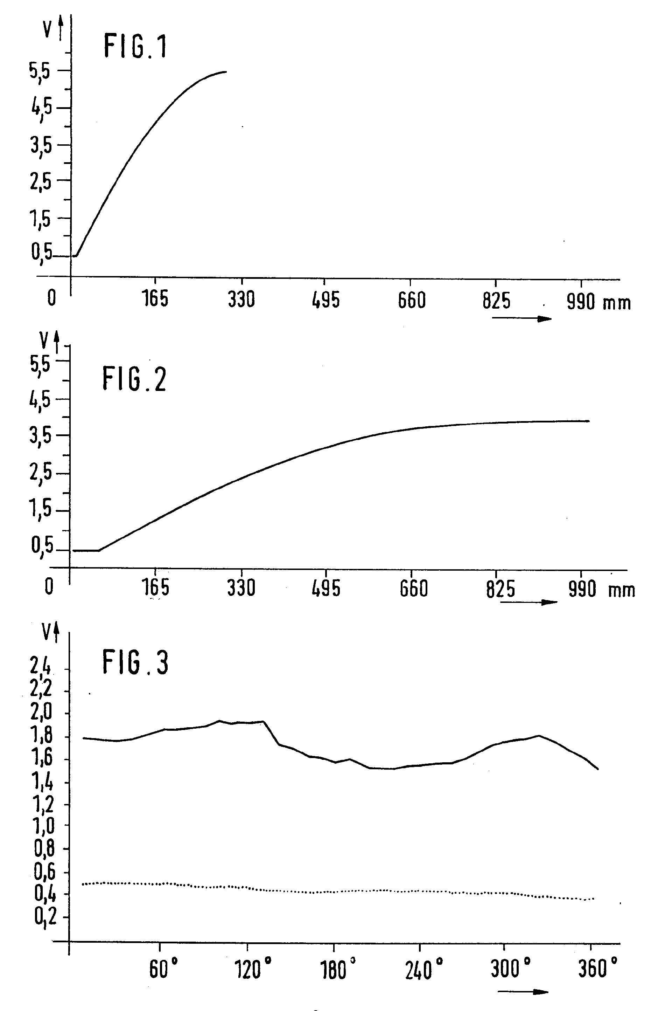

Die Figuren 1 bis 3 zeigen Signalspannungen bei einer mit jeweils konstantem Strom betriebenen Einrichtung. Bei den Figuren 1 und 2 ist die Abzisse in Entfernungseinheiten unterteilt, während sie bei Figur 3 den Drehwinkel zwischen Sender- und Empfängersonde darstellt. In den Figuren 1 bis 3 wurde auf der Ordinate in Volt

$V = (V_{Ref}/V_R)^{1/3}$ mit

$V_{Ref}$ = Referenzspannung

$V_R$ = Vektorsumme = $\sqrt{V_X^2 + V_Y^2 + V_Z^2}$ aufgetragen.

Damit ist die Ausgangsspannung V eine positive DC-Spannung, die proportional zum Abstand ist.

Bei dem mit der bekannten Einrichtung gemessenen Spannungsverlauf gemäß Figur 1 kommt es unter günstigen Voraussetzungen noch zu einem meßtechnisch verwertbaren Signal bis zu einem Abstand von 211 mm. Im Anschluß an diese obere Abstandsgrenze wird die Signalspannung zunehmend flacher, so daß sie keine Aussage über den Abstand mehr ermöglicht.

Demgegenüber zeigt Figur 2, bei der die erfindungsgemäße Einrichtung verwendet wurde, unter sonst gleichen Bedingungen einen noch auswertbaren Kurvenverlauf bis zu einer Entfernung von 660 mm.

Den Einfluß des Drehwinkels zwischen den Sonden des Senders und des Empfängers zeigt bei der bekannten Einrichtung mit der ausgezogenen, oberen Kurve Figur 3. Ersichtlich bestehen starke Maßabweichungen, die im Bereich von etwa 120° und etwa 330° von einer Anisotropie überlagert sind. Die darunter dargestellte punktierte Kurve zeigt die Signalspannung mit der erfindungsgemäßen Einrichtung. Überraschenderweise zeigt sich hierbei ein nahezu konstanter Verlauf der Signalspannung bei Drehung der Sonden des Senders und des Empfängers relativ zueinander.

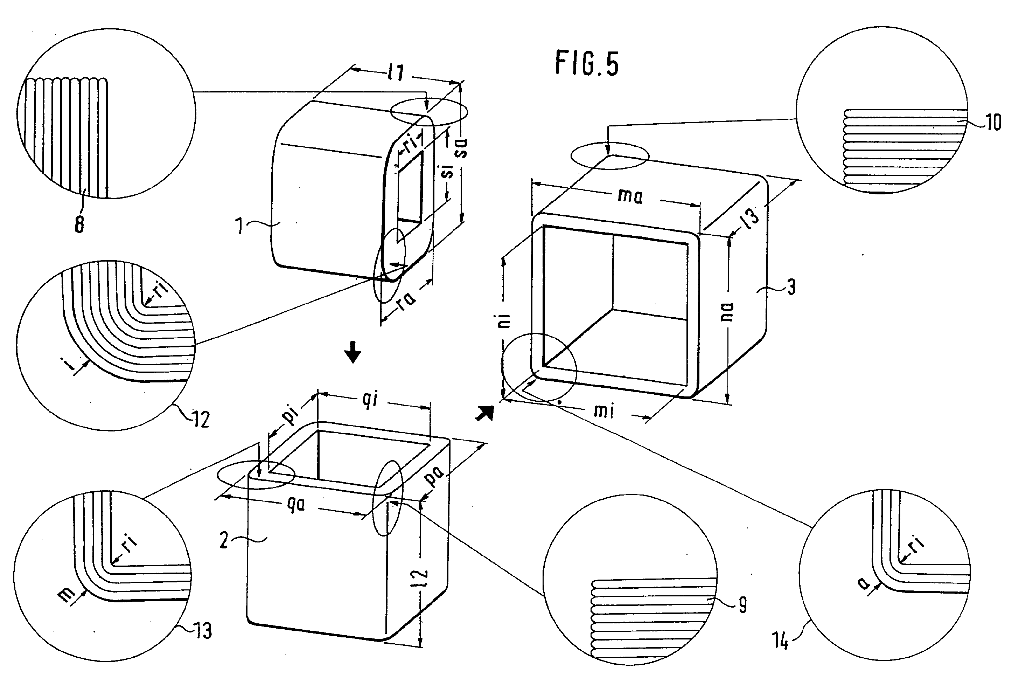

Die Sonde ist maßgeblich durch das Kreuz der Windungsachsen 4, 5 und 6, wie es Figur 4 vergrößert wiedergibt, gekennzeichnet.

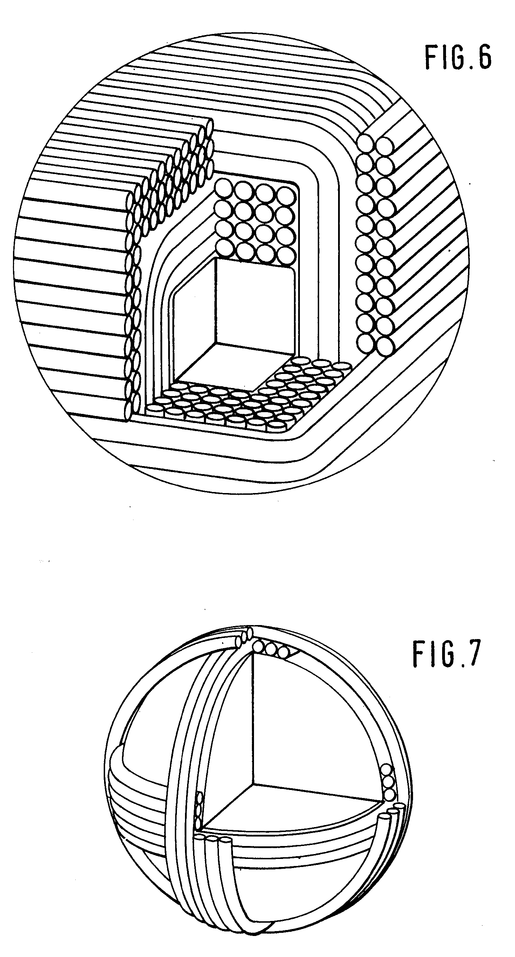

Auch die Ausbildung einer würfelförmigen Sonde gemäß Figur 5 wird durch ein rechtwinkliges Achsenkreuz gemäß Figur 4 gekennzeichnet. In diesem Falle erkennt man drei ineinander einschiebbare Quader mit den Spulen 1, 2 und 3. Jede dieser Spulen besitzt Windungen 8, 9 und 10, deren Umfänge nach außen hin größer werden. Bei konstant bleibender Zahl der Windungslagen würden sich für die jeweils äußeren Spulen größere Windungsquerschnittsflächen ergeben, die eine Anisotropie des Magnetfeldes hervorrufen würden. Um dies auszugleichen, sind die Windungslagen entsprechend reduziert. So zeigen die in den jeweiligen Eckbereichen der Spulen 1, 2 und 3 erkennbaren und in Figur 5 vergrößert in Kreisbildern 11, 12 und 13 dargestellten Windungen neun, vier bzw. drei Windungslagen. Im Ergebnis werden hierdurch bei allen Spulen gleiche Windungsquerschnitte verwirklicht. Bei einer fertiggewickelten Sonde ist dann ein Eckenbereich charakteristisch, wie er in Figur 6 vergrößert widergegeben wurde. Hieraus wird besonders deutlich, daß beim Vorteil der Erfindung das Innere der Sonde dicht mit Windungen belegt ist.

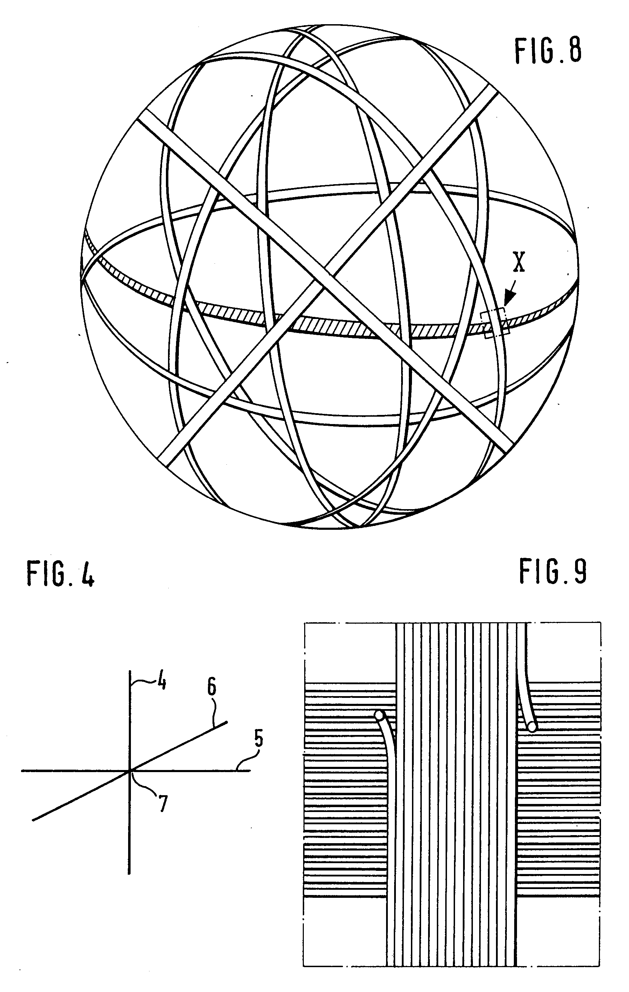

Die einzelnen Spulen lassen sich nach den Figuren 7 und 8 mit Vorteil auch um eine Kugel wickeln, wobei der Ausführungsform nach Figur 7 ein Windungsachsenkreuz gemäß Figur 4 zugrunde liegt, während bei der Ausführungsform nach Figur 8 ein mehrstrahliger Achsenstern zugrunde liegt. Die Überdeckungen jeweils aufeinander folgender Spulen ergibt sich für Figur 7 und Figur 8 entsprechend der vergrößerten Ansicht der Figur 9 , bei der man erkennt, daß die obere Windungslage weniger einzelne Windungen aufweist als die darunter liegende, um somit die Forderung eines gleichbleibenden Windungsquerschnittes zu erfüllen.

Rechnerisch ergibt sich für die Anzahl der Windungen entsprechend den geometrischen Verhältnissen nicht immer eine volle Zahl, und da man Bruchteile einer Windung schlecht verwirklichen kann, werden die Windungen auf die jeweils nächsthöhere oder nächstniedrigere Windungszahl bezogen. Um damit aber keine Verfälschung der Ergebnisse herbeizuführen, werden in derartigen Fällen die Spulen mit abweichender Stromstärke betrieben. Dies bedeutet, daß eine Spule, bei der eine halbe Windung zuwenig gewickelt worden ist, mit einem entsprechend höheren Strom beaufschlagt wird. Dieser höhere Strom muß proportional dem fehlenden Windungsanteil berechnet werden.

Eine derartige Korrektur durch die Strombeaufschlagung ist auch dann herbeizuführen, wenn Eichungen vorzunehmen sind, um besonders präzise einzutrimmen. Gerade bei nur wenigen Windungen ist dies von erheblicher Bedeutung.

Die Signaldrahtableitung der auf einer Kugel gewickelten Spule ist gemäß Figur 7 in der Weise durchgeführt, daß für jede Spule eine einzelne Ableitung existiert. Demgegenüber ist bei der Anordnung nach Figur 8 eine gemeinsame, nicht notwendig äquatoriale Signaldrahtableitung vorgesehen. Der Ausschnitt gemäß Figur 9 zeigt, wo die beiden Signalableitungsdrähte mit der gemeinsamen Ableitung verbunden sind. Die anderen freien Bahnen werden von den Drähten der anderen Spulen belegt. So muß bei zehn Spulen die gemeinsame Signalableitungsbahn 20 Einzelbahnen aufweisen.

**Patentansprüche**

1.   Elektromagnetische Einrichtung für die Messung des Abstandes zwischen den Mittelpunkten bzw. der Winkellage einer induktiven Sonde eines Empfängers und einer induktiven Sonde eines Senders, wobei a) beide Sonden mindestens eine Spule (1, 2 bzw. 3) aufweisen, b) die Sonde des Senders mindestens zwei Spulen aufweist und mit dem Sender verbunden ist, der einen Wechselspannungsgenerator aufweist, c) die Sonde des Empfängers mit dem Empfänger verbunden ist, d) mindestens eine der Spulen (1, 2 bzw. 3) Windungen hat, welche Wicklungsachsen (4, 5, 6) aufweisen, die sich in einem gemeinsamen, den Mittelpunkt der Sonde bildenden Punkt (7) schneiden, e) mindestens eine Sonde eine außenliegende Spule hat, die mindestens eine innere Spule umgreift und f) diese außenliegende Spule weniger Windungen hat als die mindestens eine innere Spule,
dadurch gekennzeichnet, daß die Windungen der mindestens einen Spule mindestens einer Sonde in Windungslagen aufgewickelt sind und daß die Spulen der mindestens einen, mehr als eine Spule aufweisenden Sonde derart ineinanderliegend angeordnet sind, daß eine innerste von nur einer Spule gebildete Wicklungslage vorhanden ist und diese unmittelbar von einer Wicklungslage mindestens einer äußeren, größeren Spule umschlossen ist und diese Spulen (1, 2, 3) weiterhin derart ausgeführt sind, daß sich für jede Spule (1, 2, 3) gleiche Windungsquerschnittsflächen ergeben.

2. Elektromagnetische Einrichtung nach Anspruch 1, dadurch gekennzeichnet, daß mindestens die Sonde des Senders drei Spulen (1, 2, 3) aufweist, deren Windungsachsen sich schneiden.

3. Elektromagnetische Einrichtung nach Anspruch 2, dadurch gekennzeichnet, daß die Windungen der Spulen (1, 2, 3) um drei zueinander senkrechte Wicklungsachen (4, 5, 6) derart gewickelt sind, daß ein Kernvolumen freibleibt und das Außenvolumen der Sonde definiert ist.

4. Elektromagnetische Einrichtung nach den Ansprüchen 1 bis 3, dadurch gekennzeichnet, daß die Spulen (1, 2, 3) mit einem mehrachsigen Kern in Form eines Würfels aufgewickelt sind, und daß ihre Windungen rechteckige Innenräume bilden, in die die jeweils kleineren Würfel einschiebbar sind.

5. Elektromagnetische Einrichtung nach den Ansprüchen 1 bis 4, dadurch gekennzeichnet, daß das Kernvolumen der Spulen (1, 2, 3) einen Hohlraum bildet.

6. Elektromagnetische Einrichtung nach Anspruch 5, dadurch gekennzeichnet, daß im Kernhohlraum ein oder mehrere IC-Chips angeordnet sind, die für eine selektive Spulenansteuerung verwendbar sind.

7. Elektromagnetische Einrichtung nach den Ansprüchen 1 bis 3 sowie 5 und 6, dadurch gekennzeichnet, daß die Windungen der Spulen (1, 2, 3) jeweils entsprechend den Größtkreisen auf einer Kugel aufgewickelt sind.

8. Elektromagnetische Einrichtung nach den Ansprüchen 1 bis 7, dadurch gekennzeichnet, daß die Sonde in ihrer Ausführung als Sender wie auch in ihrer Ausführung als Empfänger von übereinstimmendem Aufbau ist.

9. Elektromagnetische Einrichtung nach den Ansprüchen 1 bis 8, dadurch gekennzeichnet, daß für die Sonde des Senders ein Impulsgenerator vorgesehen ist, der periodisch wiederkehrende, kurzfristige Spannungsspitzen erzeugt, mit denen die Spulen beaufschlagbar sind.

## Claims

1. Electromagnetic device for measuring the distance between the centres resp. the relative position of an inductive probe of a receiver and an inductive probe of a transmitter, whereby a) both probes comprise at least one coil (1, 2 resp. 3), b) the probe of the transmitter has at least two coils and is connected to the transmitter, which transmitter comprises a generator for alternating voltage, c) the probe of the receiver is connected to the receiver, d) at least one of the coils (1, 2 resp. 3) has winding axes (4, 5, 6), which intersect in a common point (7) forming the centre of the probe, e) at least one probe has an outwardly arranged coil, which embraces the at least one inner coil and f) this outwardly arranged coil has less windings than the at least one inner coil,
characterized in that the windings of the at least one coil of at least one probe are wound in winding layers and that the coils of the at least one probe having more than one coil are arranged fitting into each other in such a way, that an innermost winding layer formed by only one coil is present and is directly surrounded by at least one outer, larger coil and that these coils (1, 2, 3) are furtheron made in such a way, that the cross sectional area of the windings of all coils (1, 2, 3) are equal.

5

2. Electromagnetic device according to claim 1, characterized in that at least the probe of the transmitter has three coils (1, 2, 3) with intersecting winding axes.

3. Electromagnetic device according to claim 2, characterized in that the windings of the coils (1, 2, 3) are wound around three mutually orthogonal winding axes (4, 5, 6) in such a way, that a core volume remains unoccupied and defines the outer volume of the probe.

4. Electromagnetic device according to the claims 1 to 3, characterized in that the coils (1, 2, 3) are wound with a multi-axes core in form of a cube and that the windings thereof form rectangular-shaped inner spaces into which the respectively smaller cube can be inserted.

5. Electromagnetic device according to the claims 1 to 4, characterized in that the core volume of the coils (1, 2, 3) forms a hollow space.

6. Electromagnetic device according to claim 5, characterized in that one or more IC-chips are arranged in the hollow space of the core, which ICs may be used for selectively driving the coils.

7. Electromagnetic device according to the claims 1 to 3, 5 and 6 characterized in that the windings of the coils (1, 2, 3) are performed according to great circles of a sphere.

8. Electromagnetic device according to the claims 1 to 7, characterized in that the probe in its make for the transmitter and in its make for the receiver is of identical construction.

9. Electromagnetic device according to the claims 1 to 8, characterized in that an impulse generator is provided for the probe of the transmitter and generates periodic, short-time voltage impulses for driving the coils.

**Revendications**

1. Dispositif électromagnétique déstiné à mesurer la distance entre les points centraux ou bien la position relative d'une sonde inductive d'un récepteur et d'une sonde inductive d'un émetteur,
   a) les deux sondes présentant au moins une bobine (1, 2 ou bien 3),
   b) la sonde de l'émetteur présentant au moins deux bobines et étant reliée avec l'émetteur qui présente de sa part un générateur de tension alternative,
   c) la sonde du récepteur étant reliée avec le récepteur,
   d) au moins une des bobines (1, 2 ou bien 3) ayant des spires qui présentent des axes d'enroulement (4, 5, 6) qui se coupent en un point commun (7) formant le point central de la sonde,
   e) au moins une sonde possédant une bobine extérieure qui enveloppe au moins une bobine intérieure et
   f) ladite bobine extérieure présentant moins de spires que la bobine intérieure ou bien les bobines intérieures,
   **caractérisé par le fait**
   que les spires de la bobine ou bien des bobines d'une sonde au moins sont enroulées en couches de spires et que les bobines de la sonde ou bien des sondes présentant plus d'une bobine sont disposées l'une à l'intérieur de l'autre de telle sorte qu'il existe une couche d'enroulement intérieure formée par une bobine seulement et que celle-ci est directement entourée par une couche d'enroulement d'au moins une bobine extérieure de plus grande dimension et que ces bobines (1, 2, 3) sont au-delà de ce fait construites de telle manière que pour chacune des bobines (1, 2, 3) résultent les mêmes superficies de la section de spires.

2. Dispositif électromagnétique selon la revendication 1, caractérisé par le fait qu'au moins la sonde de l'émetteur présente trois bobines (1, 2, 3) dont les axes de spires se coupent.

3. Dispositif électromagnétique selon la revendication 2, caractérisé par le fait que les spires des bobines (1, 2, 3) sont enroulées autour de trois axes d'enroulement (4, 5, 6) disposés respectivement perpendiculairement l'un à l'autre, de telle sorte qu'un volume de noyau reste libre et que le volume extérieur de la sonde est défini.

6

4. Dispositif électromagnétique selon les revendications 1 à 3, caractérisé par le fait que les bobines (1, 2, 3) avec un noyau multiaxial sont enroulées en forme d'un cube et que leurs spires forment des intérieurs rectangulaires dans lesquels peuvent être introduits les cubes respectifs de plus petite dimension.

5. Dispositif électromagnétique selon les revendications 1 à 4, caractérisé par le fait le volume de noyau des bobines (1, 2, 3) forme un espace vide.

6. Dispositif électromagnétique selon la revendication 5, caractérisé par le fait qu'à l'intérieur de l'espace vide formé par le noyau sont disposées une ou plusieurs puces-IC qui peuvent être utilisées pour une excitation selective de bobines.

7. Dispositif électromagnétique selon les revendications 1 à 3 ainsi que 5 et 6, caractérisé par le fait que les spires des bobines (1, 2, 3) sont respectivement enroulées conformément aux cercles maximaux sur une sphère.

8. Dispositif électromagnétique selon les revendications 1 à 7, caractérisé par le fait que la sonde présente une construction concordante aussi bien dans le cas de sa réalisation en tant qu'émetteur que dans le cas de sa réalisation en tant que récepteur.

9. Dispositif électromagnétique selon les revendications 1 à 8, caractérisé par le fait que pour la sonde de l'émetteur est prévu un générateur d'impulsions qui génère des pointes de tension instantanées se reproduisant de manière périodique, par le biais desquelles les bobines peuvent être excitées.

FIG.1

FIG.2

FIG.3

# FIG.5

8

1

l1

ri1

si

sa

ra

12

i

ri

2

pi

qi

pa

qa

l2

m

ri

13

ma

l3

ni

na

mi

3

10

9

a

ri

14

EP 0 324 136 B1

FIG.6

FIG.7

FIG.8

FIG.4

FIG.9